# EUROPÄISCHE PATENTSCHRIFT

(11) **EP 0 772 964 B1**
(45) Veröffentlichungstag und Bekanntmachung des Hinweises auf die Patenterteilung: **26.05.1999**
(21) Anmeldenummer: 96115509.0
(22) Anmeldetag: 27.09.1996
(51) Int. Cl.: A01C 7/12

(54) **Zentrale Dosiervorrichtung für eine pneumatische Verteilmaschine**
Central dosing device for a pneumatic distributor
Dispositif de dosage central pour un distributeur pneumatique

(30) Priorität: 10.11.1995 DE 19542054; 07.12.1995 DE 19545683
(43) Veröffentlichungstag der Anmeldung: 14.05.1997
(73) Patentinhaber: Amazonen-Werke H. Dreyer GmbH & Co. KG, D-49205 Hasbergen (DE)
(72) Erfinder: Dreyer, Heinz, Dr., 49205 Hasbergen (DE)

(56) Entgegenhaltungen:
- EP-A- 0 150 243
- DE-A- 4 445 313
- US-A- 4 173 298

## Beschreibung

Die Erfindung betrifft eine zentrale Dosiervorrichtung für eine pneumatische Verteilmaschine gemäß des Oberbegriffes des Patentanspruches 1.

Eine derartige zentrale Dosiervorrichtung ist beispielsweise durch die DE-OS 44 45 313 bekannt. Die zentrale Dosiervorrichtung ist unterhalb des Auslauftrichters eines Vorratsbehälters angeordnet. Über diese zentrale Dosiervorrichtung wird über eine pneumatische Förderleitung das auszubringende Material einem Verteilerkopf zugeführt, von dem es auf die einzelnen Ausbringleitungen aufgeteilt wird. Gemäß dem Ausführungsbeispiel nach Fig.6 besteht die Dosiervorrichtung aus zwei Grob- oder Normaldosierrädern und einem Feindosierrad. Jedes Grob- oder Normaldosierrad besteht aus drei Dosierscheiben. Die Dosierscheiben weisen Dosierzellen auf. Die Zellen der Dosierscheiben eines Dosierrades sind um das Maß, welches aus dem Produkt Zellenbogenlänge geteilt durch die Anzahl der Dosierscheiben gebildet wird, zueinander versetzt, so daß eine kontinuierliche und gleichmäßige Förderung erreicht wird. Dieser Versatz der einzelnen Dosierzellen hat sich, was die Gleichmäßigkeit der Dosierung betrifft, bewährt. Jedoch ist die Größe einer Zelle relativ klein und die Herstellung eines Dosierrades aus drei einzelnen Dosierscheiben sehr kostenaufwendig.

Der Erfindung liegt die Aufgabe zugrunde, unter Beibehaltung einer möglichst gleichmäßigen Dosierung eine wesentliche Vereinfachung des Grob- oder Normaldosierrades in der Herstellung zu erreichen.

Diese Aufgabe wird erfindungsgemäß dadurch gelöst, daß die Zellenstege eines Grob- oder Normaldosierrades jeweils in zwei zumindest annähernd gleich lange Abschnitte unterteilt sind, die jeweils um ein Viertel der Zellenbogenlänge versetzt zueinander sind. Infolge dieser Maßnahmen wird eine ausreichend gleichmäßige, kontinuierliche Förderung des Saatgutes erreicht. Es hat sich nämlich in praktischen Versuchen gezeigt, daß in überraschender Weise der Versatz um ein Viertel der Zellenbogenlänge ausreicht, um eine ausreichend gleichmäßige Förderung zu erhalten. Insbesondere ist hierbei zu berücksichtigen, daß eine ungleichmäßige Förderung auftritt, wenn beide Grob- oder Normaldosierräder gleichzeitig das Saatgut dosieren. Außerdem läßt sich ein aus nur zwei Abschnitten bestehendes Grob- oder Normaldosierrad mit einem relativ einfachen Kunststoffspritzwerkzeug kostengünstig herstellen.

Eine einfache versetzte Anordnung der Zellenstege wird dadurch erreicht, daß die Zellenstege zur Schaffung des versetzten Verlaufes stufenförmig durchgekröpft ausgebildet sind.

Es hat sich als vorteilhaft herausgestellt, daß die zueinander versetzten Zellenabschnitte durch einen Verbindungssteg miteinander verbunden sind, so daß sich für jedes Grob- oder Normaldosierrad eine relativ große Zelle ergibt, die sich sehr gut mit Material beim Durchlauf durch den Materialvorrat füllt.

Damit die Dichtlippe im stillgesetzten Zustand der Grob- oder Normaldosierrad eine gute Abdichtung zwischen Zellensteg und Dichtlippe ergibt, ist vorgesehen, daß sich in den Zellenstegen im Bereich des Mittelsteges eine über die Breite des Mittelsteges reichende umlaufende Rille befindet. Eine besonders gut Abdichtung zwischen Dichtlippe und Dosierrad in deren stillgesetzten Zustand wird dadurch erreicht, daß Vorrichtungen vorhanden sind, mit denen die Grob- oder Normaldosierräder in ihrem abgeschalteten Zustand in einer derartigen Position festsetzbar sind, daß sich die an dem Dosierboden angeordnete Dichtlippe mit ihrer Stirnseite zumindest annähernd in der Mitte zwischen den beiden zueinander versetzten Zellenabschnitten befindet.

Hierbei liegt dann die Stirnseite der Dichtlippe in der festgesetzten Position der Dosierräder in der Rille oder die Dichtlippe weist im Bereich des Mittelsteges eine Einschnürung auf, durch welche der Mittelsteg läuft.

Eine weitere Lösung der Aufgabe wird dadurch erreicht, daß die Zellenstege schräg zur Drehachse des Dosierrades angeordnet sind und jeweils das eine Ende des Zellensteges gegenüber dem anderen Ende des Zellensteges um ¼ der Zellenbogenlänge versetzt ist. Hierdurch wird in überraschend einfacher Weise ebenfalls eine gleichmäßige Dosierung bei einem einfach ausgebildeten Dosierrad erreicht.

Um bei einem derartigen Dosierrad eine ausreichende Abdichtung zwischen der Dichtlippe und dem Zellensteg bei einem stillgesetzten Dosierrad zu gewährleisten, wird dadurch erreicht, daß sich in der Stirnseite zumindest eines Zellensteges eine parallel zur Drehachse verlaufende Rille befindet, daß die Rille in dem Zellensteg sich befindet, der sich in dem abgeschalteten und festgesetzten Position des Dosierrades in dem Bereich der Dichtlippe befindet.

Eine weitere Lösung der Aufgabe wird durch die kennzeichnenden Merkmale des Anspruches 11 erreicht. Auch hierdurch läßt sich eine gleichmäßige Dosierung in überraschend einfach verwirklichen.

Eine weitere Lösung der Aufgabe wird bei einer Dosiervorrichtung gemäß des Oberbegriffes des Anspruches 12 dadurch erreicht, daß die Dichtlippe bezogen auf die fluchtend zur Drehachse angeordneten Zellenstege um einen Winkel von 5-15 Grad schräg verlaufend angeordnet ist. Infolge dieser Maßnahmen wird in überraschend einfacher Weise bei einem Schubdosierrad, welches fluchtend zur Drehachse verlaufende Zellenstege aufweist, eine äußerst gleichmäßige Dosierung erreicht.

Um eine ausreichende Abdichtung zwischen dem Zellensteg und der Dichtlippe sowie eine gleichmäßige Dosierung zu gewährleisten, ist vorgesehen, daß die dem Dosierrad zugewandte Seite an die von der äußeren Kante des Zellensteges durchlaufenden Weg angepaßt gekrümmt ausgebildet ist.

Um insbesondere für das Ausbringen von kleinkörnigen Saatgütern (Feinsaat), wenn die Grob- oder Normaldosierräder abgeschaltet sind, eine ausreichende Abdichtung zwischen Dosiergehäuse und den Grob- oder Normaldosierrädern auf einfacher Weise zu gewährleisten, ist vorgesehen, daß die obere Dichtvorrichtung derart ausgebildet ist, daß in der abgeschalteten und festgesetzten Position der Grob- und/oder Normaldosierräder sich die Dichtvorrichtung und ein Zellensteg sich in einer derartigen Position befinden, daß sich der im Bereich der Dichtvorrichtung sich befindende Zellensteg zumindest annähernd mit der Dichtvorrichtung überlappt.

Infolge dieser Maßnahmen wird auf einfache Weise auch im oberen Bereich zwischen dem Dosiergehäuse und den Grob- und Normaldosierrädern eine ausreichend gute Abdichtung erreicht, so daß nicht ungewollt Fehldosierungen, wenn die Normal- und Grobdosierräder abgeschaltet sind, vorkommen können.

Um Fertigungsungenauigkeiten auszugleichen und andererseits eine ausreichend gute Abdichtung zu gewährleisten, ist vorgesehen, daß die obere Dichtvorrichtung elastisch- und/oder federnd ausweichbar angeordnet und/oder ausgebildet ist. Hierbei kann diese Dichtvorrichtung aus elastischem und/oder federndem Material bestehen.

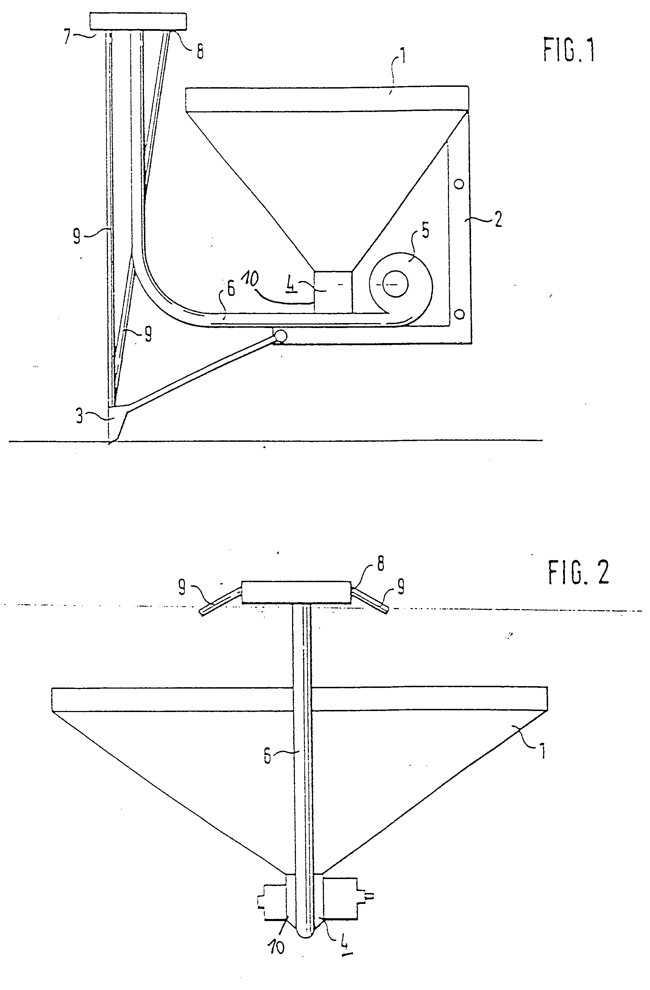

Weitere Einzelheiten der Erfindung sind den übrigen Unteransprüchen, der Beispielsbeschreibung und den Zeichnungen zu entnehmen. Hierbei zeigen
- Fig.1: eine pneumatische Drillmaschine in Seitenansicht und in Prinzipdarstellung,

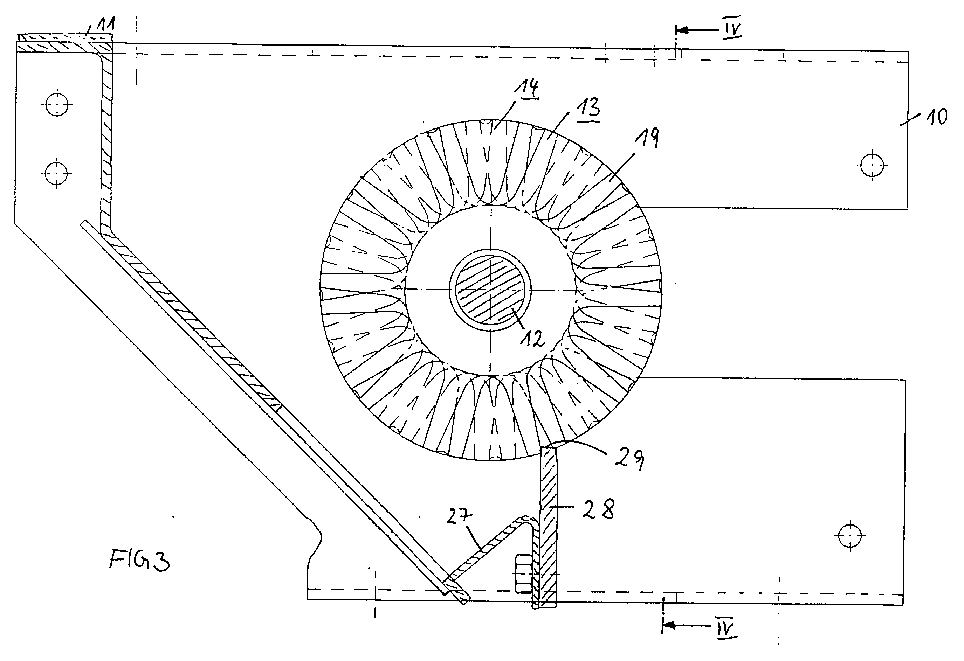

- Fig.2: die Drillmaschine in der Ansicht von hinten und in Prinzipdarstellung,
- Fig.3: die Dosiervorrichtung in der Ansicht III-III,
- Fig.4: die Dosiervorrichtung in der Ansicht IV-IV,
- Fig.5: ein Dosierrad in der Ansicht III-III,
- Fig.6: die Anordnung der beiden Dosierräder in der Ansicht IV-IV,
- Fig.7: ein weiteres Dosierrad in der Ansicht III-III,
- Fig.8: die Anordnung der Dosierräder und der Zellenstege in der Ansicht VIII-VIII,
- Fig.9: ein weiteres Dosierrad in der Ansicht IX-IX,
- Fig.10: die Anordnung der Dosierräder in der Ansicht X-X,
- Fig.11: ein weiteres Dosierrad in der Ansicht XI-XI,
- Fig.12: die Anordnung der Zellenstege der Dosierräder und der Dichtlippe in der Ansicht XII-XII,
- Fig.13: die Dosiervorrichtung in der Ansicht III-III,
- Fig.14: die Dosiervorrichtung in der Ansicht IV-IV,
- Fig.15: die Dosiervorrichtung in der Ansicht V-V,
- Fig.16: eine weitere Dosiervorrichtung in der Ansicht V-V,
- Fig.17: eine weitere Dosiervorrichtung in der Ansicht III-III und
- Fig.18: eine weitere Dosiervorrichtung in der Ansicht III-III.

Die pneumatische Verteilmaschine weist den Vorratsbehälter 1, den Rahmen 2 und die an dem Rahmen 2 angelenkten Säschare 3 auf. Das sich im Vorratsbehälter 1 befindliche Material wird über die Dosiervorrichtung 4 über eine Schleuse in die an das Gebläse 5 angeschlossene Förderleitung 6 eingespeist. Über die Förderleitung 6 gelangt das dosierte Material zu dem als Prallkopf 7 ausgebildeten Verteiler, von dem aus das Saatgut auf die einzelnen Auslässe 8, an den die zu den Säscharen 3 führenden Leitungen 9 angeschlossen sind, aufgeteilt wird.

Unterhalb des Vorratsbehälters ist die Dosiervorrichtung 4 angeordnet. Die Dosiervorrichtung 4 ist für eine Sämaschine oder einen Düngerstreuer vorgesehen. Die Dosiervorrichtung 4 weist das Dosiergehäuse 10 auf. Das Dosiergehäuse 10 ist an den Anschlußflanschen 11 des Vorratsbehälters 1 befestigt. In dem Dosiergehäuse 10 ist die Dosierwelle 12 gelagert. Auf der Dosierwelle 12 sind die beiden Grob- oder Normaldosierräder 13 und 14 und ein Feindosierrad 15 angeordnet.

Die Dosierwelle 12 wird von einer Kraftquelle mit über ein Regelgetriebe oder einen regelbaren Antrieb in bekannter und daher nicht näher dargestellter Weise angetrieben.

Auf der Dosierwelle 12 ist die aus dem Gehäuse 10 herausgeführte Hohlwelle 16, welche mit dem Grob- oder Normaldosierrad 13 einstückig verbunden ist, angeordnet. Auf der Hohlwelle 16 ist eine weitere Hohlwelle 17 angeordnet, die ebenfalls aus dem Gehäuse 10 herausgeführt ist. Mit dieser Hohlwelle 17 ist das Normal- und Grobdosierrad 14 ebenfalls einstückig verbunden. Desweiteren ist auf der Dosierwelle 12 die Hohlwelle 18 angeordnet, die einstückig mit dem Feinsärad 15 verbunden ist.

Die Grob- und Normaldosierräder 13 und 14 weisen die durch die Zellenstege 19 voneinander getrennten Dosierzellen 20 auf.

Der Hohlwelle 16 ist das Kupplungselement 21 zugeordnet, mit welchem die Hohlwelle 16 mit der Dosierwelle 12 kuppelbar ist, somit ist das Grob- oder Normaldosierrad 13 von der Dosierwelle 12 rotierend antreibbar. Der Hohlwelle 17 ist das Kupplungselement 22 zugeordnet, mittels welchem die Hohlwelle 17 mit der Hohlwelle 16 kuppelbar ist, somit ist das Grob- oder Normaldosierrad 14 über die Hohlwelle 14 mit der Dosierwelle 12 kraftschlüssig verbindbar ist. Der Hohlwelle 18 ist das Kupplungselement 23 zugeordnet, mittels welchem die Hohlwelle 18 und somit das Feinsärad 15 mit der Dosierwelle 12 kraftschlüssig kuppelbar ist.

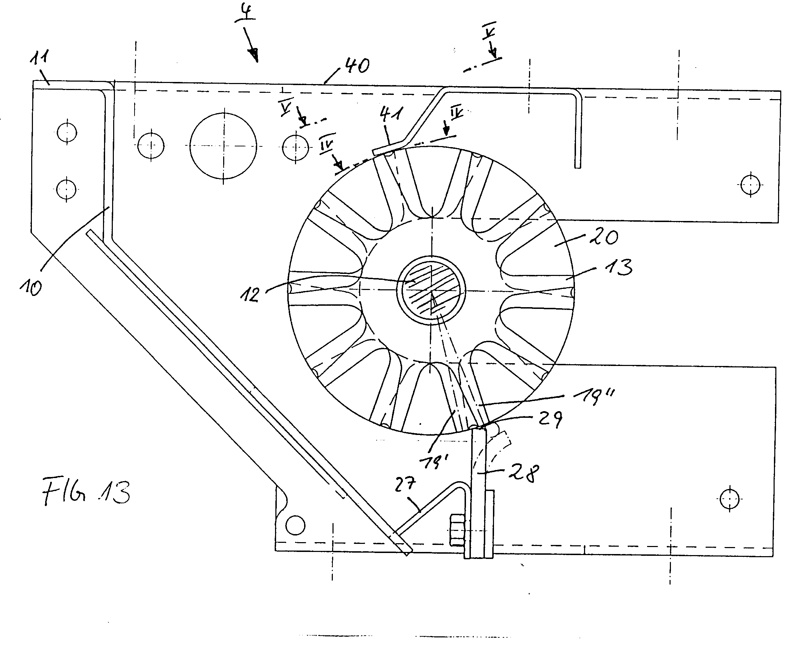

Die Zellenstege 19 eines Grob- oder Normaldosierrades 13, 14 sind, wie die Fig.5 und 6 zeigen, in zwei gleich lange Abschnitte 19'. 19'' unterteilt, die jeweils um ¼ der Zellenbogenlänge Z zueinander versetzt sind. Die Zellenstege 19 sind zur Schaffung des versetzten Verlaufes stufenförmig durchgekröpft ausgebildet. Die zueinander versetzten Zellenstegabschnitte 19', 19'' sind durch einen Verbindungssteg 24 miteinander verbunden. In den Zellenstegen 19 befindet sich im Bereich des Mittelsteges 24 eine über die Breite des Mittelsteges 24 reichende, umlaufende Rille 25. Diese Rille 25 weist eine Tiefe T von 2-5 mm auf.

Wenn die Grob- oder Normaldosierräder 13 und 14 stillgesetzt werden sollen, um nur mit dem Feinsärad 15 Saatgut auszubringen, wird über die Kupplungselemente 21, 22 die kraftschlüssige Verbindung zwischen der Dosierwelle 12 und den Kupplungselementen 21, 22 und den Hohlwellen 16, 17 der Dosierräder 13 und 14 gelöst. Hierbei kommen die Kupplungselemente 21, 22 an den Anschlägen 26 zur Anlage. Hierbei wirken die Kupplungselemente 21, 22 und die Anschläge 26 so zusammen, daß die Zellenstege 19 der beiden Dosierräder 13, 14 gleiche Position einnehmen, wie die Fig.6 auf der linken Seite mit diccken durchzogenen Linien und auf der rechten Seite mit dünnen Linien dargestellt ist. Hierbei werden die Grob-oder Normaldosierräder 13, 14 in diesen abgeschalteten Zustand in einer derartigen Position festgesetzt, daß sich die an dem Dosierboden 27 angeordnete Dichtlippe 28 mit ihrer Stirnseite 29 zumindest annähernd in der Mitte zwischen den beiden zueinander versetzten Zellenstegenabschnitten 19' 19'' befindet. Die Stirnseite 29 der Dichtlippe 28 liegt in der festgesetzten Position der Dosierräder 13, 14 in der Rille 25, so daß eine gute Abdichtung zwischen Dicht- bzw. Dosierlippe 28 und den Zellenstegen 19 erreicht wird. Die gleiche Wirkung läßt sich dadurch erreichen, daß an Stelle der Rille 25 die Dichtlippe 28 im Bereich des Mittelsteges 24 eine Einschnürung aufweist.

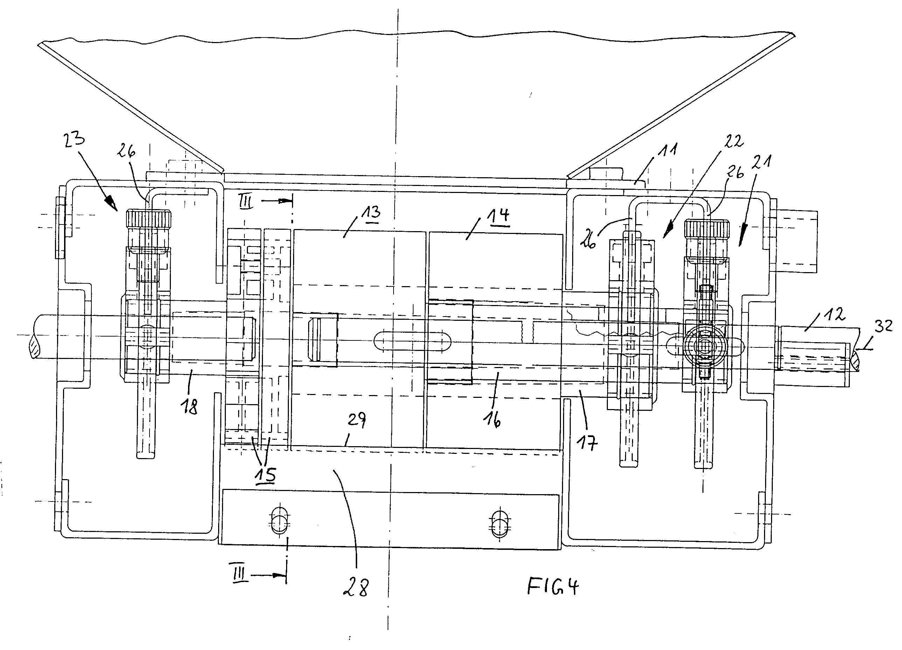

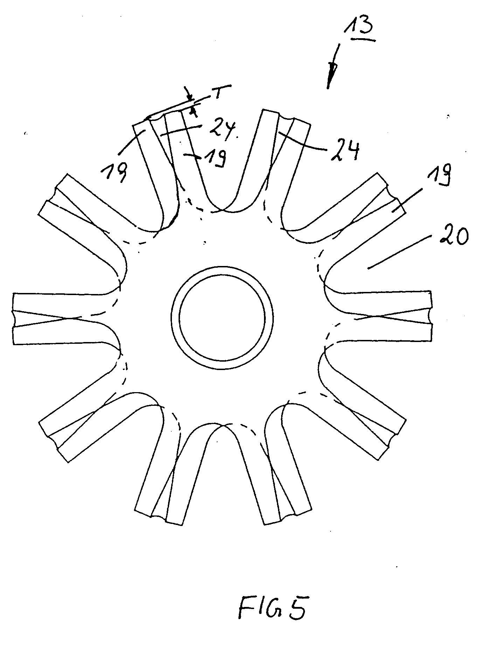

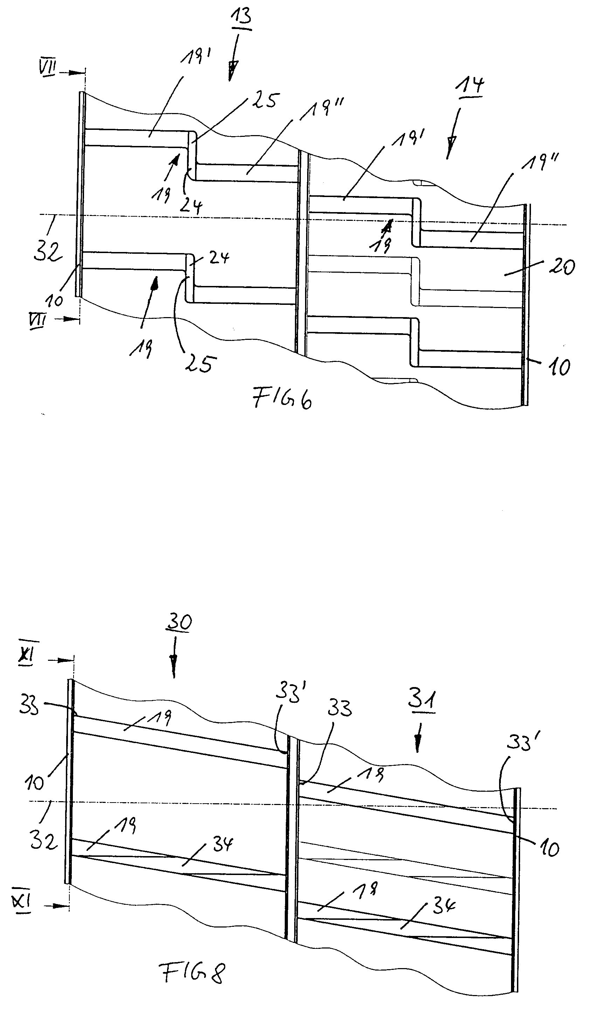

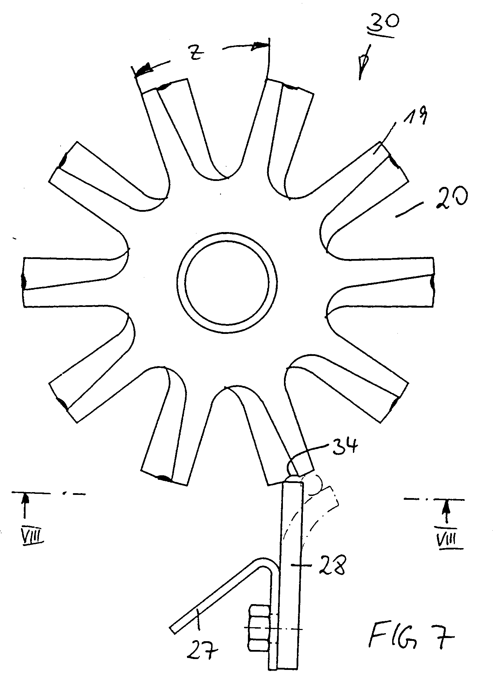

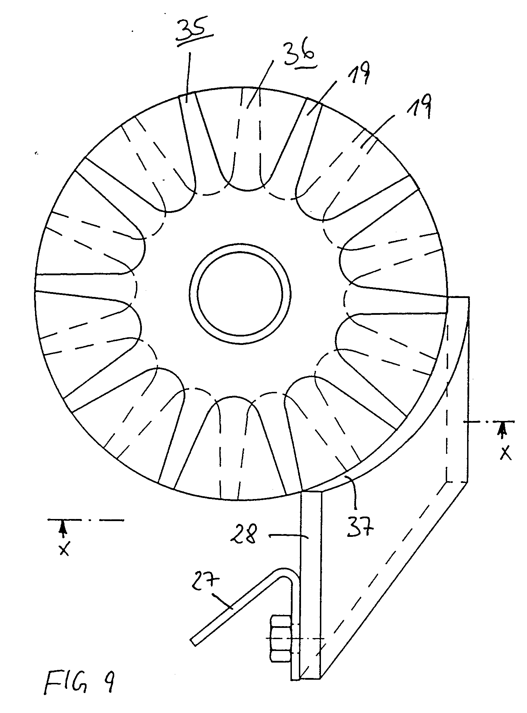

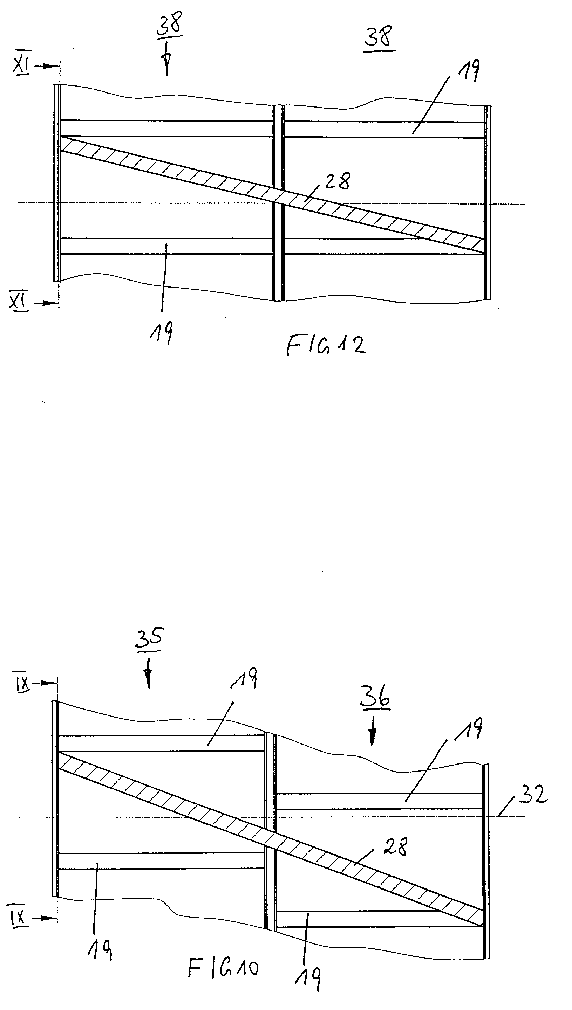

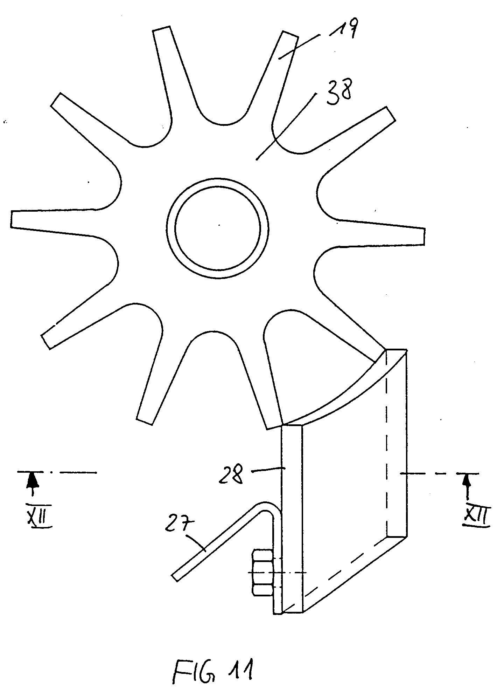

Die Dosierräder 30, 31 gemäß den Fig.7 und 8 sind anders ausgebildet, als die Dosierräder 13, 14 gemäß den Fig.5 und 6. Diese Grob- oder Normaldosierräder 30, 31 weisen ebenfalls durch Zellenstege 19 voneinander getrennte Dosierzellen 20 auf. Die Grob- und Normaldosierräder 30, 31 gemäß den Fig.7 und 8 sind wie die Grob- und Normaldosierräder 13, 14 der Fig.3-5 auf der Dosierwelle 12 angeordnet. Die Zellenstege 19 dieser Grob- und Normaldosierräder 30, 31 sind schräg zur Drehachse 32 des jeweiligen Dosierrades 30, 31 bzw. der Dosierwelle 12 angeordnet. Der Zellensteg 19 eines Grob- oder Normaldosierrades 30, 31 ist derart schräg angeordnet, daß jeweils das eine Ende 33 des Zellensteges 19 gegenüber dem anderen Ende 33' des Zellensteges 19 um ¼ der Zellenbogenlänge Z versetzt ist. In der Stirnseite eines Zellensteges 19 befindet sich eine parallel zur Drehachse 12 verlaufende Rille 34. Diese Rille 34 befindet sich in dem Zellensteg 19 , der sich in dem abgeschalteten und festgesetzten Position des Dosierrades 30, 31 in dem Bereich der Dichtlippe 28 befindet. Somit liegt die Dichtlippe 28 dieser Rille34, so daß eine ausreichende Abdichtung zwischen dem schrägen Zellensteg 19 und der Dichtlippe 28 erreicht wird.

Die Fig.9 und 10 zeigen zwei Normal- und Grobdosierräder 35, 36 der Dosiervorrichtung, wobei der Zellensteg 19 eines Dosierrades 35, 36 parallel durchgehend zur Drehachse 32 des Dosierrades 35, 36 verläuft. Um eine kontinuierliche Dosierung und Förderung des Saatgutes zu erreichen ist, ist die Dichtlippe 28 , wie die Fig.9 und 10 zeigen, bezogen auf die fluchtend zu der Drehachse 32 angeordneten Zellenstege 19 um einen Winkel von 5-30 Grad schräg verlaufend angeordnet. Hierbei ist der schräge Verlauf derart gewählt, daß die Dichtlippe 28 quasi diagonal durch den äußeren Bereich der Dosierzelle 20 verläuft. Die dem Dosierrad 35, 36 zugewandte Seite der Dichtlippe 28 ist an die von der äußeren Kante des Zellensteges 19 durchlaufenden äußeren Weg angepaßt, gekrümmt ausgebildet.

Das Dosierrad 38 gemäß den Fig.11 und 12 weist ebenfalls parallel zur Drehachse 32 des Dosierrades 38 verlaufende Zellenstege 19 auf. Die Zellenstege 19 bzw. die Dosierzellen 20 der beiden nebeneinander liegenden Grob- und Normaldosierräder 38 sind nicht versetzt zueinander angeordnet. Um auch hier eine gleichmäßige Förderung und Dosierung des Saatgutes zu erreichen, ist die Dichtlippe 28 bezogen auf die fluchtend zu der Drehachse 32 angeordneten Zellenstege 19 um ein Winkel von 5-30 Grad schräg verlaufend angeordnet. Eine derartige Anordnung der Dichtlippe 28läßt sich auch bei einem Schubraddosiersystem verwirklichen, bei dem die Fördermenge durch die freigegebene wirksame Förderbreite des Schubrades bestimmt wird.

Die Grob- und Normaldosierräder 13 und 14 gemäß Fig.13 weisen die durch die Zellenstege 19 voneinander getrennten Dosierzellen 20 auf.

Die Zellenstege 19 eines Grob- oder Normaldosierrades 13, 14 sind, wie die Fig.13, 4, 5 und 6 zeigen, in zwei gleich lange Abschnitte 19'. 19'' unterteilt, die jeweils um ¼ der Zellenbogenlänge zueinander versetzt sind. Die Zellenstege 19 sind zur Schaffung des versetzten Verlaufes stufenförmig durchgekröpft ausgebildet. Die zueinander versetzten Zellenstegabschnitte 19', 19'' sind durch einen Verbindungssteg 24 miteinander verbunden. In den Zellenstegen 19 befindet sich im Bereich des Mittelsteges 24 eine über die Breite des Mittelsteges 24 reichende, umlaufende Rille 25.

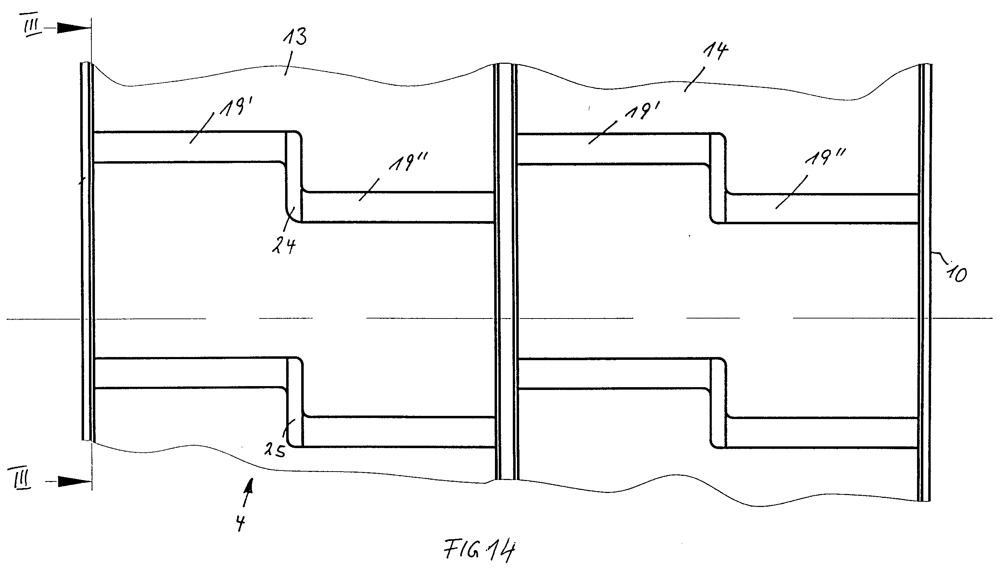

Wenn die Grob- oder Normaldosierräder 13 und 14 stillgesetzt werden sollen, um nur mit dem Feinsärad Saatgut auszubringen, wird über die Kupplungselemente die kraftschlüssige Verbindung zwischen der Dosierwelle 12 und den Kupplungselementen und den Hohlwellen 16, 17 der Dosierräder 13 und 14, wie in der Hauptanmeldung beschrieben, gelöst. Hierbei kommen die Kupplungselemente an den Anschlägen zur Anlage. Hierbei wirken die Kupplungselemente und die Anschläge so zusammen, daß die Zellenstege 19 der beiden Dosierräder 13, 14 gleiche Position einnehmen, wie die Fig.13 und 14 zeigen. Hierbei werden die Grob-oder Normaldosierräder 13, 14 in diesen abgeschalteten Zustand in einer derartigen Position festgesetzt, daß sich die an dem Dosierboden 27 angeordnete Dichtlippe 28 mit ihrer Stirnseite 29 zumindest annähernd in der Mitte zwischen den beiden zueinander versetzten Zellenstegenabschnitten 19' 19'' befindet. Die Stirnseite 29 der Dichtlippe 28 liegt in der festgesetzten Position der Dosierräder 13, 14 in der Rille 25, so daß eine gute Abdichtung zwischen Dicht- bzw. Dosierlippe 28 und den Zellenstegen 19 erreicht wird.

Oberhalb der Dosierräder 13 und 14 ist an dem Dosiergehäuse 10 im Bereich der Auslauföffnung 40 des Vorratsbehälters 1 ein die Dosierräder 13 und 14 gegen den Vorratsbehälter 1 und das Dosiergehäuse 10 dichtend abschließende obere Dichtvorrichtung 41 angeordnet.

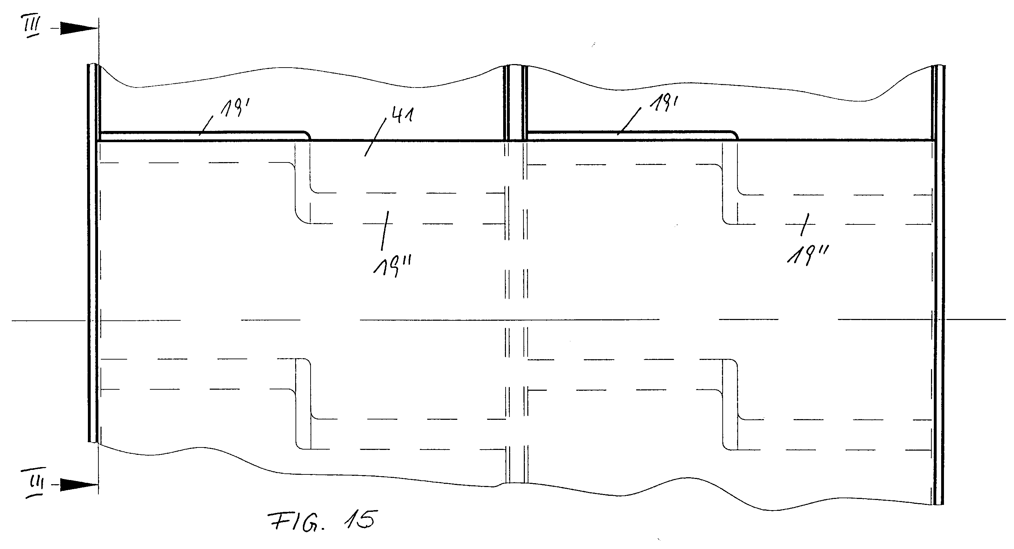

Die obere Dichtvorrichtung 41 ist derart ausgebildet, daß in der abgeschalteten und festgesetzten Position der Dosierräder 13 und 14, wie in Fig.13 und 15 dargestellt, sich die Dichtvorrichtung 41 und ein Zellensteg 19', 19'' sich in einer derartigen Position befinden, daß der sich im Bereich der Dichtvorrichtung 41 sich befindene Zellensteg 19', 19'' zumindest annähernd mit der Dichtvorrichtung 41 überlappt, und daß die Länge der Dichtvorrichtung 41 in Drehrichtung der Dosierräder 13, 14 gesehen zumindest ¼ der Zellenbogenlänge aufweist. Somit dichtet die Dichtvorrichtung 41 sicher ab.

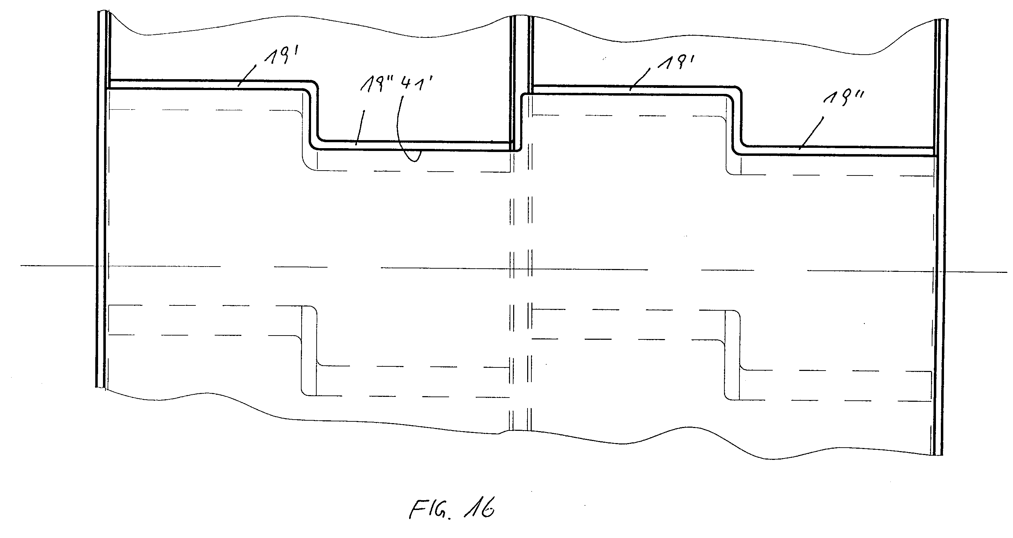

Bei dem Ausführungsbeispiel nach Fig.16 ist die obere Dichtvorrichtung 41' derart ausgebildet, daß in der abgeschalteten und festgesetzten Position der Grob-oder Normaldosierräder 13, 14 sich die Dichtvorrichtung 41' und ein Zellensteg 19', 19'' in einer derartigen Position befindet, daß der sich im Bereich der Dichtvorrichtung sich befindene Zellensteg 19', 19'' zumindest annähernd mit der Dichtvorrichtung 41' überlappt. Hierbei ist die Dichtvorrichtung 41' entsprechend der versetzten Anordnung der Zellenstege 19', 19'' ausgebildet.

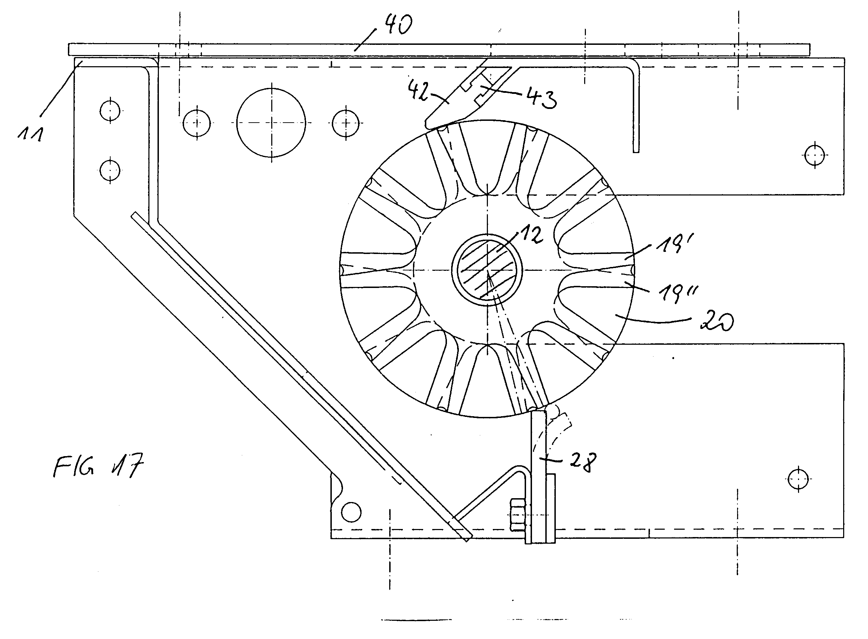

Gemäß dem Ausführungsbeispiel nach Fig. 17 ist die obere Dichtvorrichtung 42 aus einem elastischen Material hergestellt und an dem Dosiergehäuse 10 mit einer geeigneten Klemmvorrichtung 43 festgesetzt. Somit ist also die obere Dichtvorrichtung 42 federnd und elastisch ausgebildet.

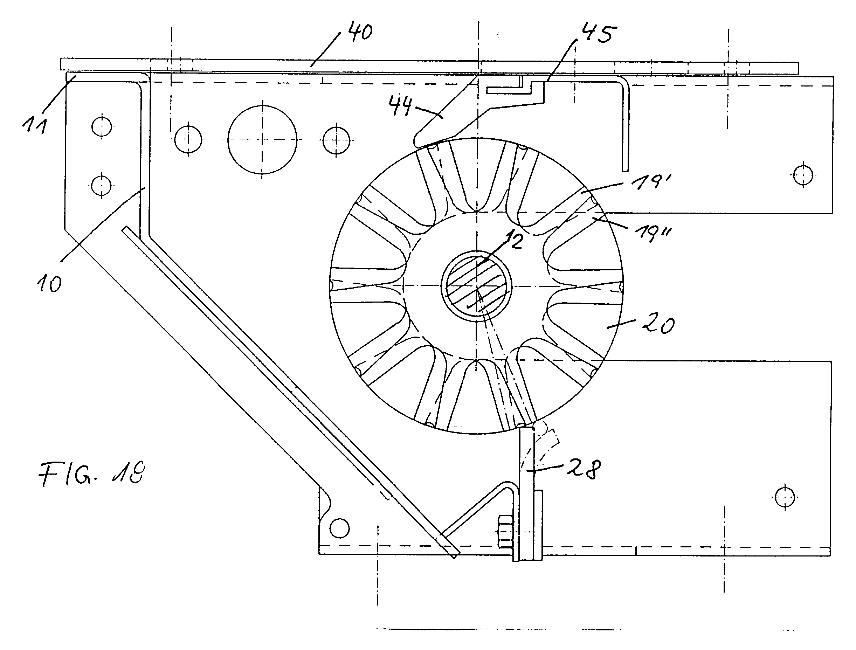

Gemäß dem Ausführungsbeispiel nach Fig.18 ist die obere Dichtvorrichtung 44 ebenfalls aus einem elastischem Material ausgebildet und an der Deckwand 45 des Dosiergehäuses 10 befestigt.

## Patentansprüche

1. Zentrale Dosiervorrichtung ( 4 ) für eine pneumatische Verteilmaschine mit in einem Gehäuse ( 10 ) angeordneten zwei Grob- oder Normaldosierrädern ( 13, 14 ) und zumindest einem Feindosierrad ( 15 ), wobei die beiden Grob- oder Normaldosierräder unabhängig voneinander und/oder gemeinsam mit der angetriebenen Dosierwelle ( 12 ) kuppelbar sind, wobei die beiden Grob- oder Normaldosierräder durch Zellenstege ( 19 ) voneinander getrennte Dosierzellen ( 20 ) aufweisen, dadurch gekennzeichnet, daß die Zellenstege ( 19 ) eines Grob- oder Normaldosierrades ( 13, 14 ) jeweils in zwei zumindest annähernd gleich lange Abschnitte ( 19', 19'' )unterteilt sind, die jeweils um ¼ der Zellenbogenlänge ( Z ) versetzt zueinander sind.

2. Dosiervorrichtung nach Anspruch 1, dadurch gekennzeichnet, daß die Zellenstege ( 19 ) zur Schaffung des versetzten Verlaufes stufenförmig durchgekröpft ausgebildet sind.

3. Dosiervorrichtung nach einem oder mehreren der vorstehenden Ansprüche, dadurch gekennzeichnet, daß die zueinander versetzten Zellenstegabschnitte ( 19', 19'' ) durch einen Verbindungssteg ( 24 ) miteinander verbunden sind.

4. Dosiervorrichtung nach einem oder mehreren der vorstehenden Ansprüche, dadurch gekennzeichnet, daß sich in den Zellenstegen ( 19 ) im Bereich des Mittelsteges ( 24 ) eine über die Breite des Mittelsteges ( 24 ) reichende, umlaufende Rille ( 25 ) befindet.

5. Dosiervorrichtung nach Anspruch 4, dadurch gekennzeichnet, daß die Rille ( 25 ) eine Tiefe ( T ) von 2 bis 5 mm aufweist.

6. Dosiervorrichtung nach einem oder mehreren der vorstehenden Ansprüche, dadurch gekennzeichnet, daß Vorrichtungen ( 21, 22, 26) vorhanden sind, mit denen die Grob- oder Normaldosierräder ( 13, 14, 30, 31, 35, 36, 38 ) in ihrem abgeschalteten Zustand in einer derartigen Position festsetzbar sind, daß sich die an dem Dosierboden ( 27 ) angeordnete Dichtlippe ( 28 ) mit iher Stirnseite zumindest annähernd in der Mitte zwischen den beiden zueinander versetzten Zellenstegabschnitten ( 19', 19'' ) befindet.

7. Dosiervorrichtung nach Anspruch 6, dadurch gekennzeichnet, daß die Stirnseite der Dichtlippe ( 28, ) in der festgesetzten Position der Dosierräder ( 13, 14 ) in der Rille ( 25 ) liegt.

8. Dosiervorrichtung nach einem der Ansprüchen 6 oder 7, dadurch gekennzeichnet, daß die Dichtlippe ( 28 ) im Bereich des Mittelsteges ( 24 ) eine Einschnürung aufweist.

9. Zentrale Dosiervorrichtung ( 4 ) für eine pneumatische Verteilmaschine mit in einem Gehäuse ( 10 ) angeordneten zwei Grob- oder Normaldosierrädern ( 13, 14 ) und zumindest einem Feindosierrad ( 15 ), wobei die beiden Grob- oder Normaldosierräder unabhängig voneinander und/oder gemeinsam mit der angetriebenen Dosierwelle ( 12 ) kuppelbar sind, wobei die beiden Grob- oder Normaldosierräder durch Zellenstege ( 19 ) voneinander getrennte Dosierzellen ( 20 ) aufweisen, dadurch gekennzeichnet, daß die Zellenstege ( 19 ) schräg zur Drehachse ( 32 ) des Dosierrades ( 30, 31 ) angeordnet sind, daß jeweils das eine Ende ( 33 ) des Zellensteges 19 ) gegenüber dem anderen Ende ( 33'' ) des Zellensteges ( 19 ) um ¼ der Zellenbogenlänge ( Z ) versetzt ist.

10. Dosiervorrichtung nach Anspruch 9, dadurch gekennzeichnet, daß sich in der Stirnseite zumindest eines Zellensteges ( 19 ) eine parallel zur Drehachse ( 32 ) verlaufende Rille ( 34 ) befindet, daß die Rille ( 34 ) sich in dem Zellensteg ( 19 ) befindet, der sich in dem abgeschalteten und festgesetzten Position der Dosierräder ( 30, 31 ) in dem Bereich der Dichtlippe ( 28 ) befindet.

11. Zentrale Dosiervorrichtung ( 4 ) für eine pneumatische Verteilmaschine mit in einem Gehäuse ( 10 ) angeordneten zwei Grob- oder Normaldosierrädern ( 13, 14 ) und zumindest einem Feindosierrad ( 15 ), wobei die beiden Grob- oder Normaldosierräder unabhängig voneinander und/oder gemeinsam mit der angetriebenen Dosierwelle ( 12 ) kuppelbar sind, wobei die beiden Grob- oder Normaldosierräder durch Zellenstege ( 19 ) voneinander getrennte Dosierzellen ( 20 ) aufweisen, wobei an dem Boden ( 27 ) des Gehäuses eine Dichtlippe angeordnet ist, dadurch gekennzeichnet, daß zumindest die Stirnseite der Dichtlippe ( 28 ) bezogen auf die fluchtend zu der Drehachse ( 32 ) angeordneten Zellenstege ( 19 ) um einen Winkel von 5-30 Grad schräg verlaufend angeordnet ist.

12. Zentrale Dosiervorrichtung ( 4 ) für eine pneumatische Verteilmaschine mit in einem Gehäuse ( 10 ) angeordneten als Schubrad ausgebildeten Grob- oder Normaldosierrädern ( 13, 14 ) und/oder einem Feindosierrad ( 15 ), wobei die beiden Grob- oder Normaldosierräder durch Zellenstege ( 19 ) voneinander getrennte Dosierzellen ( 20 ) aufweisen und wobei an dem Boden ( 27 ) des Gehäuses eine Dichtlippe angeordnet ist, dadurch gekennzeichnet, daß die Dichtlippe ( 28 ) bezogen auf die fluchtend zu der Drehachse ( 32 ) angeordneten Zellenstege ( 19 ) um einen Winkel von 5-30 Grad schräg verlaufend angeordnet ist.

13. Dosiervorrichtung nach Anspruch 11 und 12, dadurch gekennzeichnet, daß die dem Dosierrad ( 35, 36, 38 ) zugewandte Seite der Dichtlippe ( 28 ) an die von der äußeren Kante der Zellenstege durchlaufend äußeren Weg angepaßt gekrümmt ausgebildet ist.

14. Zentrale Dosiervorrichtung ( 4 ) für eine pneumatische Verteilmaschine mit in einem Gehäuse angeordneten zwei Grob- oder Normaldosierräder ( 13, 14 ) und zumindest einem Feindosierrad ( 15 ), wobei die beiden Grob- oder Normaldosierräder unabhängig und/oder gemeinsam mit der angetriebenen Dosierwelle ( 12 ) kuppelbar sind, wobei die beiden Grob- oder Normaldosierräder durch Zellenstege ( 19 ) voneinander getrennte Dosierzellen ( 20 ) aufweisen, wobei an dem Dosierboden des Dosiergehäuses ein vorzugsweise als Dichtlippe (28) ausgebildetes Dichtelement angeordnet ist und sich oberhalb der Dosierräder an dem Dosiergehäuse im Bereich der Auslauföffnung des Vorratsbehälters ein die Dosierräder gegen den Vorratsbehälter und/oder das Dosiergehäuse dichtend abschließende obere Dichtvorrichtung befindet, wobei die Zellenstege (19) eines Grob- oder Normaldosierrades jeweils in zwei zumindest gleich lange Abschnitte (19', 19'') unterteilt sind, die jeweils um ¼ der Zellenbogenlänge versetzt zueinander sind, insbesondere nach Anspruch 1, dadurch gekennzeichnet, daß die obere Dichtvorrichtung (41, 41', 42, 44) derart ausgebildet ist, daß in der abgeschalteten und festgesetzten Position der Grob- und/oder Normaldosierräder (13, 14) sich die Dichtvorrichtung (41, 41', 42, 44) und ein Zellensteg (19', 19'') sich in einer derartigen Position befinden, daß sich der im Bereich der Dichtvorrichtung (41, 41', 42, 44) sich befindende Zellensteg (19', 19'') zumindest annähernd mit der Dichtvorrichtung (41, 41', 42, 44) überlappt.

15. Dosiervorrichtung nach Anspruch 1 und/oder 14, dadurch gekennzeichnet, daß die Länge der Dichtvorrichtung (41, 41', 42, 44) in Drehrichtung der Dosierräder (13, 14) gesehen zumindest etwa ¼ der Zellenbogenlänge aufweist.

16. Dosiervorrichtung nach Anspruch 1 und/oder 14, dadurch gekennzeichnet, daß die obere Dichtvorrichtung (42, 44) elastisch und/oder federnd ausweichbar angeordnet und/oder ausgebildet ist.

17. Dosiervorrichtung nach Anspruch 16, dadurch gekennzeichnet, daß die obere Dichtvorrichtung (42, 44) aus elastischen und/oder federnden Material besteht.

## Claims

1. Central metering device (4) for a pneumatic distributor with two coarse or standard metering wheels (13, 14) and at least one fine metering wheel (15) disposed in a housing, the two coarse or standard metering wheels being able to be coupled independently of one another and/or together with the driven metering shaft (12), the two coarse or standard metering wheels having metering cells (20) separated from one another by cell webs (19), **characterised in that** the cell webs (19) of a coarse or standard metering wheel (13, 14) are in each case divided into at least two sections (19', 19'') of approximately equal length and offset to one another respectively by ¼ of the cell curve length (Z).

2. Metering device according to claim 1, **characterised in that** the cell webs (19) are configured crimped in steps to create the offset course.

3. Metering device according to one or more of the preceding claims, **characterised in that** the cell web sections (19', 19''), offset in relation to one another, are connected to one another by a connecting web (24).

4. Metering device according to one or more of the preceding claims, **characterised in that**, in the cell webs (19) in the region of the centre web (24) there is located a peripheral groove (25), extending over the width of the centre web (24).

5. Metering device according to claim 4, **characterised in that** the groove (25) has a depth (T) of 2 to 5 mm.

6. Metering device according to one or more of the preceding claims, **characterised in that** devices (21, 22, 26) ore present, by means of which the coarse or standard metering wheels (13, 14, 30, 31, 35, 36, 38) may, in their switched-off state, be fixed in such a position that the sealing lip (28) disposed on the metering base (27) is located with its front at least approximately in the middle between the two cell web sections (19', 19'') offset in relation to one another.

7. Metering device according to claim 6, **characterised in that** the front of the sealing lip (28) lies in the groove (25) in the fixed position of the metering wheels (13, 14).

8. Metering device according to one of claims 6 or 7, **characterised in that** the sealing lip (28) has a constriction in the region of the centre web (24).

9. Central metering device (4) for a pneumatic distributor with two coarse or standard metering wheels (13, 14) and at least one fine metering wheel (15) disposed in a housing, the two coarse or standard metering wheels being able to be coupled independently of one another and/or together with the driven metering shaft (12), the two coarse or standard metering wheels having metering cells (20) separated from one another by cell webs (19), **characterised in that** the cell webs (19) are disposed at an inclined angle to the rotational axis (32) of the metering wheel (30, 31), in that respectively the one end (33) of the cell web (19) is offset in relation to the other end (33'') of the cell web (19) by ¼ of the cell curve length (Z).

10. Metering device according to claim 9, **characterised in that** there is located in the front of at least one cell web (19) a groove (34) running parallel to the rotational axis (32), in that the groove (34) is situated in the cell web (19) which is located in the region of the sealing lip (28) in the switched-off and fixed position of the metering wheels (30, 31).

11. Central metering device (4) for a pneumatic distributor with two coarse or standard metering wheels (13, 14) and at least one fine metering wheel (15) disposed in a housing, the two coarse or standard metering wheels being able to be coupled independently of one another and/or together with the driven metering shaft (12), the two coarse or standard metering wheels having metering cells (20) separated from one another by cell webs (19), and a sealing lip being disposed on the base (27) of the housing, **characterised in that** at least the front of the sealing lip (28) is disposed running at an inclined angle of 5-30 degrees in relation to the cell webs (19) disposed in alignment with the rotational axis (32).

12. Central metering device (4) for a pneumatic distributor with, configured as a pushing wheel and disposed in a housing, coarse or standard metering wheels (13, 14) and/or a fine metering wheel (15), the two coarse or standard metering wheels having metering cells (20) separated from one another by cell webs (19), and a sealing lip being disposed on the base (27) of the housing, **characterised in that** the sealing lip (28) is disposed running at an inclined angle of 5-30 degrees in relation to the cell webs (19) disposed in alignment with the rotational axis (32).

13. Metering device according to claim 11 and 12, **characterised in that** the side of the sealing lip (28) facing the metering wheel (35, 36, 38) is configured curved to match the continuously external path of the outer edge of the cell webs.

14. Central metering device (4) for a pneumatic distributor with two coarse or standard metering wheels (13, 14) and at least one fine metering wheel (15) disposed in a housing, the two coarse or standard metering wheels being able to be coupled independently of one another and/or together with the driven metering shaft (12), the two coarse or standard metering wheels having metering cells (20) separated from one another by cell webs (19), a sealing element, preferably configured as a sealing lip (28), being disposed on the metering base of the metering housing and there being located, above the metering wheels on the metering housing in the region of the exit aperture of the reservoir, an upper sealing device sealing the metering wheels off from the reservoir and/or the metering housing, and the cell webs (19) of a coarse or standard metering wheels being divided in each case into two sections (19',19'')which are at least equal in length and respectively offset to one another by ¼ of the cell curve length, especially according to claim 1, **characterised in that** the upper sealing device (41, 41', 42, 44) is configured in such a way that, in the switched-off and fixed position of the coarse and/or standard wheels (13, 14), the sealing device (41, 41', 42, 44) and a cell web (19',19'') are located in such a position that the cell web (19',19'') located in the region of the sealing device (41, 41', 42, 44) overlaps at least approximately with the sealing device (41, 41', 42, 44).

15. Metering device according to claim 1 and/or 14, **characterised in that** the length of the sealing device (41, 41', 42, 44), seen in the direction of the metering wheels (13, 14) is at least ¼ of the cell curve length.

16. Metering device according to claim 1 and/or 14, **characterised in that** the upper sealing device (42, 44) is disposed and/or configured so as to yield elastically and/or resiliently.

17. Metering device according to claim 16, **characterised in that** the upper sealing device (42, 44) consists of elastic and/or resilient material.

## Revendications

1. Dispositif de dosage central (4) pour un distributeur pneumatique comprenant deux roues de dosage, une roue de dosage grossier et une roue de dosage normal (13, 14) logées dans un boîtier (10) et au moins une roue de dosage de précision (15),
les deux roues de dosage grossier et normal pouvant être couplées indépendamment et/ou en commun sur l'arbre de dosage (12), entraîné,
les deux roues de dosage grossier ou normal ayant des alvéoles de dosage (20) séparées l'une de l'autre par des entretoises d'alvéoles (19),
caractérisé en ce que
les entretoises d'alvéoles (19) d'une roue de dosage grossier ou d'une roue de dosage normal (13, 14) sont subdivisées chaque fois en deux segments (19', 19'') au moins sensiblement de même longueur, qui sont décalés l'un par rapport à l'autre, chaque fois d'un quart d'une longueur d'arc d'alvéole Z.

2. Dispositif de dosage selon la revendication 1,
caractérisé en ce que
les entretoises d'alvéoles (19) sont cintrées en gradins pour créer un tracé décalé.

3. Dispositif selon l'une ou plusieurs des revendications précédentes,
caractérisé en ce que
les segments d'entretoises d'alvéoles (19', 19'') décalés sont reliés par des entretoises de liaison (24).

4. Dispositif selon l'une ou plusieurs des revendications précédentes,
caractérisé en ce que
dans les entretoises d'alvéoles (19), dans la zone de l'entretoise médiane (24), il y a une rainure (25) périphérique, s'étendant sur la largeur de l'entretoise médiane (24).

5. Dispositif de dosage selon la revendication 4,
caractérisé en ce que
la nervure (25) a une profondeur (T) comprise entre 2 et 5 mm.

6. Dispositif selon l'une quelconque des revendications précédentes,
caractérisé par
des dispositifs (21, 22, 26) permettant de maintenir les roues de dosage grossier et normal (13, 14, 30, 31, 35, 36, 38) à l'état coupé, dans une position telle que la lèvre d'étanchéité (28), prévue sur le fond de dosage (27), se trouve avec sa face frontale au moins sensiblement au milieu entre les deux segments d'entretoises de cellules (19', 19'') décalés l'un par rapport à l'autre.

7. Dispositif de dosage selon la revendication 6,
caractérisé en ce que
la face frontale de la lèvre d'étanchéité (28) se situe dans la nervure (25) lorsque les roues de dosage (13, 14) occupent une position fixe.

8. Dispositif de dosage selon l'une des revendications 6 ou 7,
caractérisé en ce que
la lèvre d'étanchéité (28) présente une partie rétrécie dans la zone de l'entretoise médiane (24).

9. Dispositif de dosage central (4) pour un distributeur pneumatique comprenant deux roues de dosage, une roue de dosage grossier et une roue de dosage normal (13, 14) logées dans un boîtier et au moins une roue de dosage de précision (15), les deux roues de dosage grossier et normal étant couplées indépendamment l'une de l'autre ou en commun à l'arbre de dosage (12), entraîné,
les deux roues de dosage grossier et normal ayant des alvéoles de dosage (20) séparées l'une de l'autre par des entretoises d'alvéoles (19),
caractérisé en ce que
les entretoises d'alvéoles (19) sont inclinées par rapport à l'axe de rotation (32) de la roue de dosage (30, 31), chaque fois une extrémité (33) de l'entretoise d'alvéole (19) est décalée par rapport à l'autre extrémité (33'') de l'entretoise d'alvéole (19) d'une longueur correspondant à un quart de la longueur d'arc d'alvéole (Z).

10. Dispositif de dosage selon la revendication 9,
caractérisé en ce que
dans la face frontale d'au moins une entretoise d'alvéole (19) il y a une rainure (34) parallèle à l'axe de rotation (32),
la rainure (34) se trouve dans l'entretoise d'alvéole (19) qui est dans la zone de la lèvre d'étanchéité (28) lorsque la roue de dosage (30, 31) est en position coupée et arrêtée.

11. Dispositif de dosage central (4) pour un distributeur pneumatique comprenant deux roues de dosage, l'une de dosage grossier et l'autre de dosage normal (13, 14) logées dans un boîtier (10) et au moins une roue de dosage de précision (15),
les deux roues de dosage grossier et normal pouvant être couplées indépendamment l'une de l'autre et/ou en commun à l'arbre de dosage (12), entraîné,
les deux roues de dosage grossier ou normal ayant des alvéoles de dosage (20) séparées l'une de l'autre par des entretoises d'alvéoles (19) et le fond (27) du boîtier comportant une lèvre d'étanchéité,
caractérisé en ce qu'
au moins la face frontale de la lèvre d'étanchéité (28), par rapport à l'entretoise d'alvéole (19) alignée sur l'axe de rotation (32), est inclinée d'un angle de 5-30 degrés.

12. Dispositif de dosage central (4) pour un distributeur pneumatique comprenant des roues de dosage grossier ou normal (13, 14) logées dans un boîtier (10) et réalisées comme une roue de poussée, ou encore une roue de dosage de précision (15),
les deux roues de dosage grossier et normal ayant des alvéoles (20) séparées l'une de l'autre par des entretoises d'alvéoles (19), et une lèvre d'étanchéité équipe le fond (27) du boîtier,
caractérisé en ce que
la lèvre d'étanchéité (28) est décalée d'un angle de 5-30 degrés en biais par rapport à l'entretoise d'alvéole (19) qui est alignée sur l'axe de rotation (32).

13. Dispositif de dosage selon les revendications 11 et 12,
caractérisé en ce que
la face de la lèvre d'étanchéité (28) tournée vers la roue de dosage (35, 36, 38) est courbée et adaptée à l'arrête extérieure de la trajectoire extérieure parcourue par l'entretoise d'alvéole.

14. Dispositif de dosage central (4) pour un distributeur pneumatique comprenant deux roues de dosage grossier ou normal (13, 14) logées dans un boîtier et au moins une roue de dosage de précision (15), les deux roues de dosage grossier ou normal pouvant être couplées indépendamment l'une de l'autre et/ou en commun à l'arbre de dosage (12), entraîné,
les deux roues de dosage grossier ou normal ayant des alvéoles de dosage (20) séparées l'une de l'autre par des entretoises d'alvéoles (19) et le fond du boîtier de dosage comporte un élément d'étanchéité, de préférence en forme de lèvre d'étanchéité (28), et dans la zone de la roue de dosage, sur le boîtier de dosage, au niveau de l'orifice de sortie du réservoir d'alimentation, il est prévu un dispositif d'étanchéité supérieur, séparant de manière étanche la roue de dosage par rapport au réservoir et/ou au boîtier de dosage,
les entretoises d'alvéoles (19) d'une roue de dosage grossier ou normal étant subdivisées en au moins deux segments de même longueur (19', 19'') décalés chaque fois d'un quart de la longueur d'arc d'une alvéole, notamment selon la revendication,
caractérisé en ce que
le dispositif d'étanchéité supérieur (41, 41', 42, 44) est réalisé pour qu'en position coupée et arrêtée des roues de dosage grossier et/ou normal (13, 14), le dispositif d'étanchéité (41, 41', 42, 44) et une entretoise d'alvéole (19', 19'') se trouvent dans une position telle que l'entretoise d'alvéole (19', 19'') qui se trouve dans la zone du dispositif d'étanchéité (41, 41', 42, 44) chevauche au moins sensiblement le dispositif d'étanchéité (41, 41', 42, 44).

15. Dispositif de dosage selon la revendication 1 et/ou 14,
caractérisé en ce que
la longueur du dispositif d'étanchéité (41, 41', 42, 44), dans le sens de rotation des roues de dosage (13, 14), correspond à au moins sensiblement un quart de la longueur d'un arc d'alvéole.

16. Dispositif de dosage selon la revendication 1 et/ou 14,
caractérisé en ce que
le dispositif d'étanchéité supérieur (42, 44) est réalisé et/ou disposé de manière à pouvoir s'échapper élastiquement et/ou à ressort.

17. Dispositif de dosage selon la revendication 16,
caractérisé en ce que
le dispositif d'étanchéité supérieur (42, 44) est en matière élastique et/ou à ressort.
